(19) Europäisches Patentamt
European Patent Office
Office européen des brevets

(11) **EP 3 926 928 A1**

(12) **EUROPEAN PATENT APPLICATION**

(43) Date of publication:
**22.12.2021 Bulletin 2021/51**

(51) Int Cl.:
***H04L 29/08*** *(2006.01)*

(21) Application number: **21169837.8**

(22) Date of filing: **22.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2020 JP 2020103985**

(71) Applicant: **FUJITSU LIMITED**
**Kanagawa 211-8588 (JP)**

(72) Inventors:
• **Iikura, Fumi**
 **Kanagawa, 211-8588 (JP)**
• **Yokoyama, Ken**
 **Kanagawa, 211-8588 (JP)**

(74) Representative: **Hoffmann Eitle**
**Patent- und Rechtsanwälte PartmbB**
**Arabellastraße 30**
**81925 München (DE)**

(54) **DELAY CAUSE IDENTIFICATION METHOD, DELAY CAUSE IDENTIFICATION PROGRAM, DELAY CAUSE IDENTIFICATION APPARATUS**

(57)   A delay cause identification method includes calculating a statistical value of a processing time of a call source workload for each of paths from the call source workload corresponding to a call source microservice to a plurality of call destination workloads corresponding to a call destination microservice, and determining that a network related to the call destination microservice or the call destination microservice is a cause of a delay, when the first condition which there exists, based on the statistical value, a call destination workload common to paths involving a first processing time of the call source microservice among the paths and the second condition which a first difference and a second difference are within a predetermined range are satisfied, the first difference being a difference in a first average value of the processing time, the second difference being difference in a second average value of a response time.

FIG. 1

EP 3 926 928 A1

**Description**

[Technical Field]

The embodiments discussed herein are related to a delay cause identification method, a delay cause identification program, and a delay cause identification apparatus.

[Background Art]

In recent years, for developing information technology (IT) systems, an architecture has been used in which one service is divided into a plurality of microservices and the microservices are coupled to each other by an application programming interface (API).
The related art includes one in which: communication information including a reception time point on a transmission source side of a plurality of services and a transmission time point on a transmission destination side is acquired; for each service, a transmission source candidate having a reception time point within a predetermined period of time before the transmission time point is extracted; and a relational chart representing a relationship among the services is generated based on the transmission source candidates of the services.

[Citation List]

[Patent Literature]

[PTL 1] Japanese Laid-open Patent Publication No. 2018-081440

[Summary of Invention]

[Technical Problem]

However, in the related art, an investigation for a cause of a response delay in the microservice architecture is difficult to identify whether the cause of a response delay of a service is in processing on the service or in a network.
In one aspect, an object of the present disclosure is to improve accuracy in identifying a cause of a response delay of a service.

[Solution to Problem]

In one embodiment, a delay cause identification method is provided that includes: when a delay in a response time from a call destination microservice to a call source microservice is detected, calculating a statistical value of a processing time of a call source workload for each of paths from the call source workload corresponding to the call source microservice to a plurality of call destination workloads corresponding to the call destination microservice; and determining that a network related to the call destination microservice or the call destination microservice is a cause of the delay, when it is determined that there exists a call destination workload common to paths having relatively long processing times of the call source microservice among the paths, and it is determined that a difference in an average value of the processing time of the call source microservice between an abnormal state and a normal state and a difference in an average value of a response time from the call destination microservice to the call source microservice between the abnormal state and the normal state are within a predetermined range, based on the statistical value for each of the paths calculated.

[Effects of Invention]

According to an aspect of the present disclosure, an effect of improving accuracy in identifying a cause of a response delay of a service may be obtained.

[Brief Description of Drawings]

FIG. 1 is an explanatory diagram illustrating a system configuration example of an information processing system 100 according to an embodiment;

FIG. 2 is an explanatory diagram illustrating an implementation example of a microservice architecture;

FIG. 3 is an explanatory diagram illustrating a specific example of microservices;

FIG. 4 is an explanatory diagram illustrating a relationship between a trace and a timer;

FIG. 5 is a block diagram illustrating a hardware configuration example of a delay cause identification device 101;

FIG. 6 is an explanatory diagram illustrating a specific example of timer data;

FIG. 7 is an explanatory diagram illustrating a specific example of trace data;

FIG. 8 is a block diagram illustrating a functional configuration example of the delay cause identification device 101;

FIG. 9 is an explanatory diagram illustrating an example of detection of a delay in a response time of a microservice;

FIG. 10 is an explanatory diagram illustrating a specific example of a path based transmission source span statistical table;

FIG. 11 is an explanatory diagram illustrating a relationship between spans and a response time of the microservice;

FIG. 12 is an explanatory diagram illustrating a length of a span for each path between workloads;

FIG. 13 is a flowchart (part 1) illustrating an example of a first delay cause identification processing procedure of the delay cause identification device 101;

FIG. 14 is a flowchart (part 2) illustrating an example of the first delay cause identification processing procedure of the delay cause identification device 101;

FIG. 15 is a flowchart illustrating an example of a specific processing procedure of first difference calculation processing;

FIG. 16 is a flowchart illustrating an example of a specific processing procedure of second difference calculation processing;

FIG. 17 is a flowchart (part 1) illustrating an example of a second delay cause identification processing procedure of the delay cause identification device 101;

FIG. 18 is a flowchart (part 2) illustrating an example of the second delay cause identification processing procedure of the delay cause identification device 101; and

FIG. 19 is a flowchart (part 3) illustrating an example of the second delay cause identification processing procedure of the delay cause identification device 101.

[Description of Embodiments]

Hereinafter, embodiments of a delay cause identification method and a delay cause identification program according to the present disclosure are described in detail with reference to the drawings.

(Embodiment)

First of all, a system configuration example of an information processing system 100 according to an embodiment is described. The information processing system 100 is applied to, for example, a computer system that provides a web service using a microservice architecture.

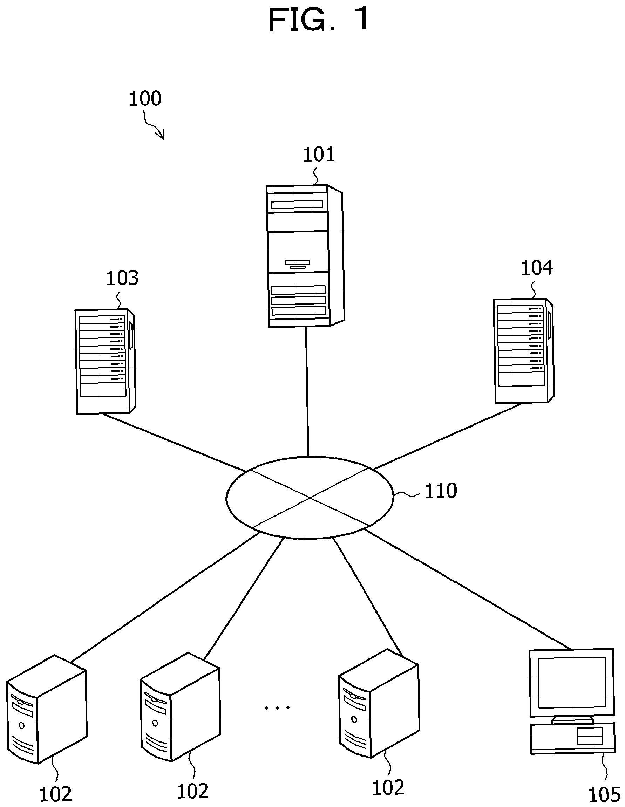

FIG. 1 is an explanatory diagram illustrating a system configuration example of the information processing system 100 according to the embodiment. In FIG. 1, the information processing system 100 includes a delay cause identification device 101, a plurality of processing devices 102, an application performance monitoring (APM) system 103, a distributed tracing system 104, and an operator terminal 105. In the information processing system 100, the delay cause identification device 101, the processing devices 102, the APM system 103, the distributed tracing system 104, and the operator terminal 105 are coupled to each other via a wired or wireless network 110. The network 110 is, for example, the Internet, a local area network (LAN), a wide area network (WAN), or the like.

The delay cause identification device 101 is a computer that identifies a cause of a response delay of microservices. The microservices are architectures as a result of dividing a single service into respective functions. For example, the division of a single service into a plurality of microservices facilitates addition of functions and maintenance, and thus may lead to improvement in development speed.

The processing devices 102 are each a computer that executes the microservices. The processing devices 102 are capable of executing, for example, a virtual machine (VM) or a container. The VM is a virtual computer that operates in an execution environment constructed by dividing hardware resources of a physical computer.

The VM is implemented by virtualizing hardware resources with, for example, a hypervisor. The container corresponds to a user space that is created by internally dividing a kernel of an operating system (OS), and operates as one of the processes of the OS. The microservices are implemented with, for example, a VM or a container.

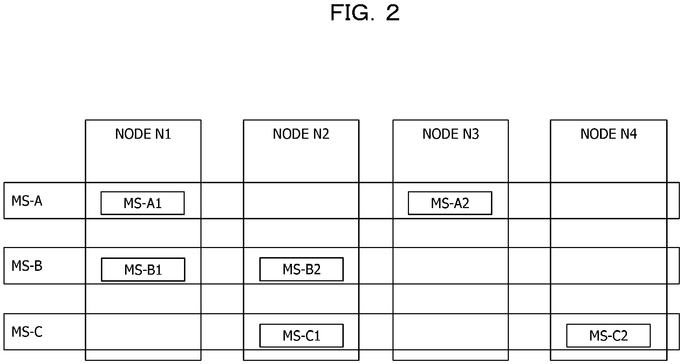

The plurality of microservices which is obtained by dividing a single service are coupled to each other with an API. The microservices are each implemented by one or a plurality of workloads. The workload is an entity of the microservice. An implementation example of the microservice architecture will be described with reference to FIG. 2.

In the following description, an arbitrary microservice # may be referred to as "MS-#".

FIG. 2 is an explanatory diagram illustrating an implementation example of the microservice architecture. In FIG. 2, nodes N1 to N4 are computers that execute microservices, and correspond to the processing devices 102, for example. Workloads of the microservices are distributed to a plurality of nodes for increasing the availability of the microservices.

For example, MS-A1 and MS-A2 are workloads of MS-A, and are distributed to the nodes N1 and N3. MS-B1 and MS-B2 are workloads of MS-B, and are distributed to the nodes N1 and N2. MS-C1 and MS-C2 are workloads of MS-C, and are distributed to the nodes N2 and N4.

Referring back to FIG. 1, the APM system 103 is a computer system that monitors performance of an application by existing application performance monitoring (APM). For example, the APM system 103 uses an APM tool to collect metrics related to a microservice API call, and detects an abnormality.

As the metrics, for example, the number of API calls per unit time, an error rate, a microservice response time, and/or the like are collected. The metrics are calculated, for example, based on information measured in the processing on each microservice in the processing devices 102, and are transmitted from the processing devices 102 to the APM system 103 via an agent (not illustrated).

For example, a case is assumed where MS-B calls MS-C. In this case, a response time from MS-C (call destination) to MS-B (call source) is measured by measuring, with an APM timer in the processing on MS-B, a time from transmission of a request to MS-C to reception of a response from MS-C.

It is noted that the information measured with the APM timer is converted into a statistical value at the time of collection. For example, the response time from MS-C measured with the timer is temporarily recorded in a buffer. A statistical value (for example, an average, a standard deviation, or the like) of the response times recorded in the buffer is calculated once in every predetermined period of time (for example, one minute) and is transmitted to the APM system 103.

In many cases, a call source microservice is unable to identify a workload of a call destination microservice. Thus, the response time measured with the APM timer is not a response time in workload units, but is a response time in microservice units.

The distributed tracing system 104 is a computer system that measures a span (processing time) of each workload using existing distributed tracing. The span is a time from a time point when each workload receives a request to a time point when the workload returns a response. For example, the span is measured in the processing devices 102 that executes the workload, and is transmitted from the processing devices 102 to the distributed tracing system 104 via an agent (not illustrated).

For example, a case is assumed where MS-B2 calls MS-C2. In this case, in the processing device 102 (VM, container) in which MS-C2 is disposed, the span of MS-C2 is measured by measuring a time from a time point when MS-C2 receives a request from MS-B2, which is the call source, to a time point when MS-C2 returns a response to MS-B2, which is the call source.

The operator terminal 105 is a computer used by an operator of a service. For example, the operator of the service may confirm the cause of a response delay of a microservice identified by the delay cause identification device 101, on the operator terminal 105. The operator terminal 105 is, for example, a personal computer (PC), a tablet terminal, or the like.

For example, the delay cause identification device 101, the APM system 103, the distributed tracing system 104, and the processing devices 102 are implemented by cloud computing servers. The APM system 103 and the distributed tracing system 104 may be implemented by the same server. The APM system 103 and the distributed tracing system 104 may be implemented by the delay cause identification device 101 or any of the plurality of processing devices 102.

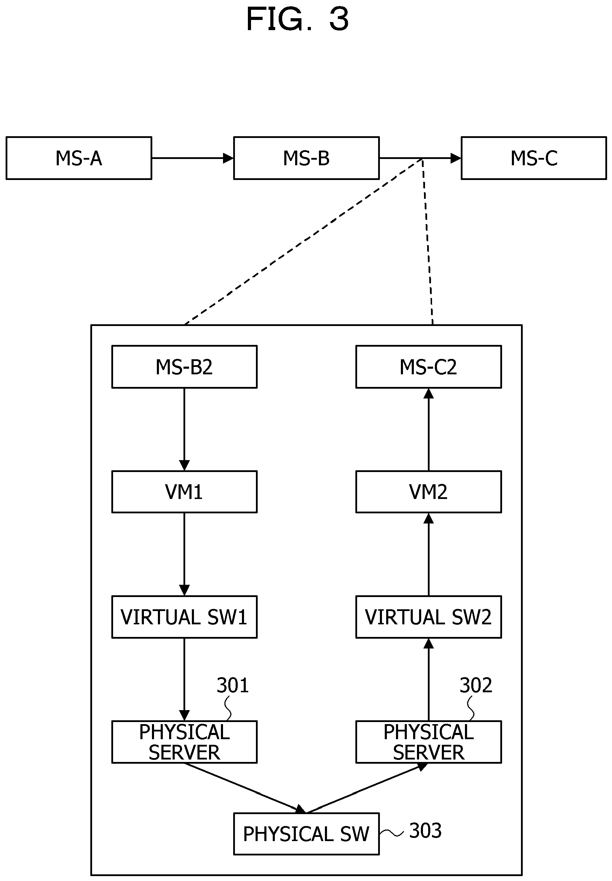

A specific example of microservices in which a single service is divided will be described with reference to FIG. 3.

FIG. 3 is an explanatory diagram illustrating a specific example of the microservices. In FIG. 3, MS-A, MS-B, and MS-C are examples of a plurality of microservices as a result of dividing a single service. MS-A, MS-B, and MS-C are a series of microservices executed in response to a request from a client.

In FIG. 3, MS-A, MS-B, and MS-C are called in the order of "MS-A => MS-B => MS-C" in response to the request. Focusing on the call from MS-B to MS-C, it is assumed that MS-B2, which is a workload of MS-B, calls MS-C2, which is a workload of MS-C.

MS-B2 is executed by VM1 operating on a physical server 301. MS-C2 is executed by VM2 operating on a physical server 302. The physical servers 301 and 302 correspond to the processing devices 102 illustrated in FIG. 1. A virtual SW1 corresponding to VM1, a physical SW303 between the physical servers 301 and 302, and a virtual SW2 corresponding to VM2 are present on a communication path between MS-B2 and MS-C2.

In microservice failure analysis, a trace may be used to investigate a cause of a response delay. The trace is a collection of microservice spans (workload spans) of a plurality of microservices implementing a single service, and is information with which a length of a span of each workload is identifiable. In the example in FIG. 3, the span of MS-B2 and the span of MS-C2 are identifiable from the trace.

However, with an extension of the span of the distributed tracing only, it is difficult to identify whether a response delay of a service is in processing on the service or in a network (communication path). When the problem lies in the network, the virtual SW, the physical server, the physical SW, or the like may be a portion where the cause lies.

For example, it is assumed that a delay has occurred in the virtual SW2 on the communication path from MS-B2 to MS-C2. In this case, there is no problem in the processing on MS-C2 itself, and thus the length of the span of MS-C2 is as usual. On the other hand, the span of MS-B2 is longer than usual even if there is no problem in the processing on MS-B2 itself. Thus, a determination that the problem lies on the side executing MS-B2 simply based on the extension of the span renders the identification of the cause of the delay difficult.

With the APM timer, the response time from the call destination microservice to the call source microservice is measurable. With the distributed tracing, a processing time of a workload of the call destination microservice is measurable. Thus, a time it took for the communication is obtainable if a difference is obtainable between a response time from the call destination microservice measured with the APM timer and the processing time of the workload of the call destination measured by the distributed tracing.

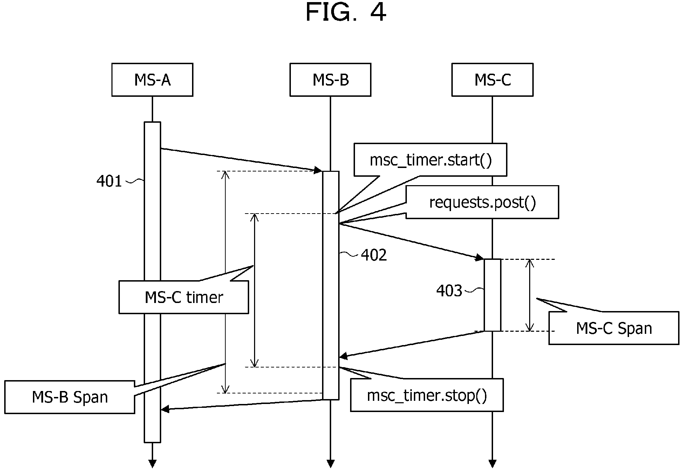

FIG. 4 is an explanatory diagram illustrating a relationship between a trace and a timer. In FIG. 4, bars 401, 402, and 403 respectively representing the processing times (spans) of MS-A, MS-B, and MS-C are illustrated on the axis representing time. For example, the bar 403 represents MS-C Span. MS-C Span is a processing time of MS-C measured by the distributed tracing. MS-C timer is a response time from MS-C to MS-B measured with the APM timer.

Therefore, if the difference between MS-C timer and MS-C Span is obtainable, the time it took on the communication path between MS-B and MS-C is obtainable. However, the information measured with the APM timer is rounded into a statistical value at the time of collection. Thus, the response time (MS-C timer, for example) measured with the APM timer is not directly comparable with the span (MS-C Span, for example) of the trace.

An existing method of checking a delay in a communication path includes one using a technique of packet capture. The packet capture includes capturing packets flowing through a communication line and analyzing or aggregating the packets. However, it is difficult to regularly perform the packet capture in terms of cost. Furthermore, the packet capture is unavailable for identifying a portion where the cause lies in a situation where there was a delay but is already resolved.

The delay in the communication path may be investigated using metrics stored in a switch or the like in the communication path. However, the metrics stored in a switch or the like may be managed by an infrastructure operator different from the operator of the service. In this case, the operator of the service is unable to directly see the metrics.

Therefore, in the present embodiment, a delay cause identification method for improving accuracy in identifying a cause of a response delay of a service by using the APM timer and the metrics of the distributed tracing generally collected for microservice performance monitoring will be described.

(Hardware Configuration Example of Delay Cause Identification Device 101)

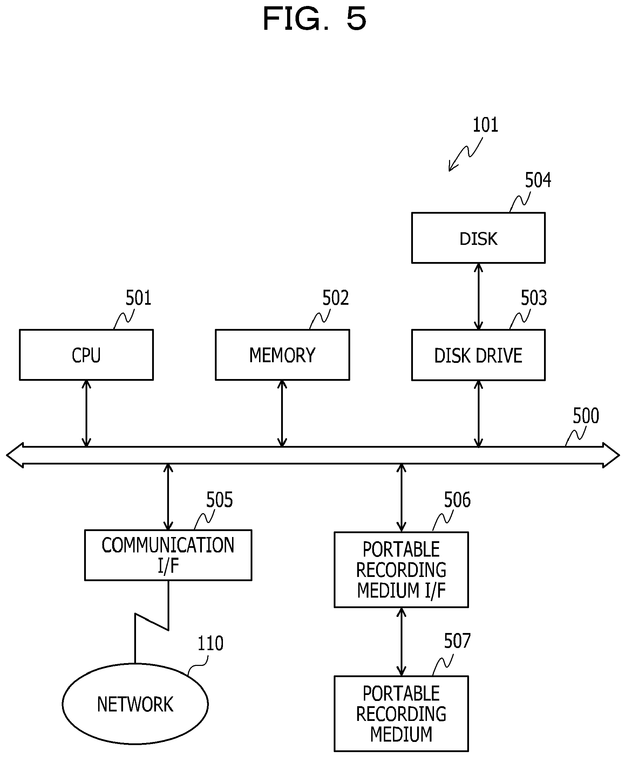

FIG. 5 is a block diagram illustrating a hardware configuration example of the delay cause identification device 101. In FIG. 5, the delay cause identification device 101 includes a central processing unit (CPU) 501, a memory 502, a disk drive 503, a disk 504, a communication interface (I/F) 505, a portable recording medium I/F 506, and a portable recording medium 507. These components are coupled to one another via a bus 500.

The CPU 501 controls the entire delay cause identification device 101. The CPU 501 may include a plurality of cores. The memory 502 includes, for example, a read-only memory (ROM), a random-access memory (RAM), a flash ROM, and the like. For example, the flash ROM stores a program of the OS, the ROM stores application programs, and the RAM is used as a work area of the CPU 501. Programs stored in the memory 502 are loaded into the CPU 501 to cause the CPU 501 to execute processing coded in the programs.

The disk drive 503 controls reading and writing of data from and to the disk 504 according to the control of the CPU 501. The disk 504 stores data written into the disk 504 under the control of the disk drive 503. Examples of the disk 504 include a magnetic disk, an optical disc, and the like.

The communication I/F 505 is connected to the network 110 via a communication line, and is connected to external computers (for example, the processing devices 102, the APM system 103, the distributed tracing system 104, and the operator terminal 105 illustrated in FIG. 1 and the like) via the network 110. The communication I/F 505 functions as an interface between the network 110 and the inside of the device and controls input and output of data from and to the external computers.

The portable recording medium I/F 506 controls reading and writing of data from and to the portable recording medium 507 according to the control of the CPU 501. The portable recording medium 507 stores data written into the portable recording medium 507 under the control of the portable recording medium I/F 506. Examples of the portable recording medium 507 include a compact disc (CD)-ROM, a digital versatile disc (DVD), and a Universal Serial Bus (USB) memory.

The delay cause identification device 101 may include, in addition to the foregoing components, for example, a solid-state drive (SSD), an input device, a display, and others. The delay cause identification device 101 does not include, of the foregoing components, for example, the disk drive 503, the disk 504, the portable recording medium I/F 506, and the portable recording medium 507.

The processing devices 102, the APM system 103, the distributed tracing system 104, and the operator terminal 105 illustrated in FIG. 1 may be implemented by the same hardware configuration as that of the delay cause identification device 101. However, the operator terminal 105 includes an input device and a display for example, in addition to the components described above.

(Specific Example of Timer Data)

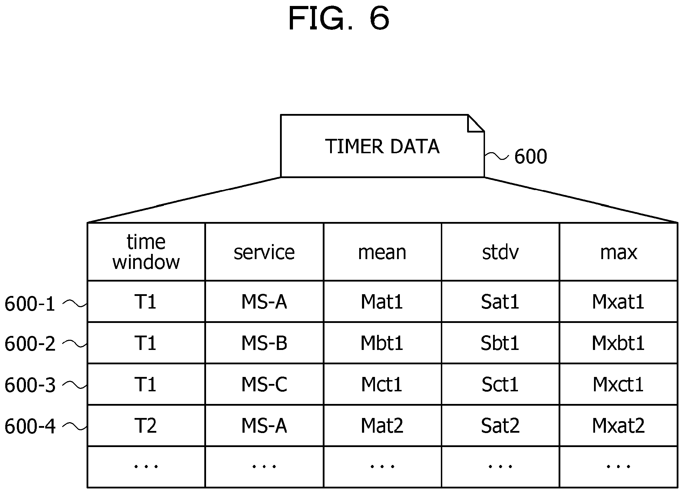

Next, a specific example of timer data used by the delay cause identification device 101 will be described with reference to FIG. 6. The timer data is generated in the APM system 103, for example, and is transmitted to the delay cause identification device 101.

FIG. 6 is an explanatory diagram illustrating a specific example of the timer data. In FIG. 6, timer data 600 includes a plurality of response time data pieces (for example, response time data pieces 600-1 to 600-4). Each response time data piece is statistical information about the response time of each microservice measured with the APM timer.

The response time data includes information including "time window", "service", "mean", "stdv", and "max", "time window" indicates a period delimited at a predetermined time interval. The predetermined time interval is, for example, a period of time about several seconds to one minute. "service" indicates the name of the microservice.

"mean" indicates an average of the response time of the microservice measured in "time window". The response time of the microservice is, for example, a response time from a call destination microservice measured by the call source (for example, see FIG. 4). "stdv" indicates a standard deviation of response time of the microservice measured in "time window". "max" indicates the maximum value of the response time of the microservice measured in "time window".

For example, the response time data piece 600-1 indicates an average Mat1, a standard deviation Sat1, and a maximum value Mxat1 of the response times of MS-A measured in a period T1.

(Specific Example of Trace Data)

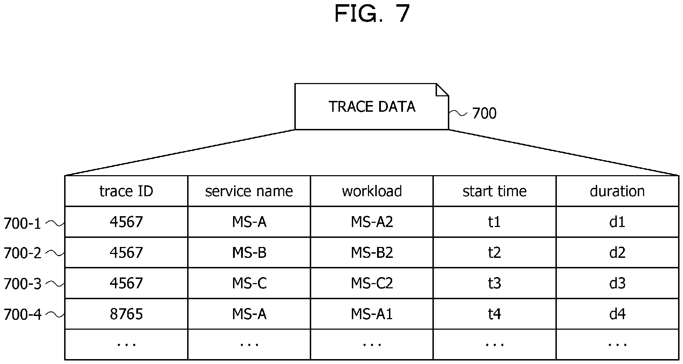

Next, a specific example of trace data used by the delay cause identification device 101 will be described with reference to FIG. 7. For example, the trace data is generated in the distributed tracing system 104 and is transmitted to the delay cause identification device 101.

FIG. 7 is an explanatory diagram illustrating a specific example of the trace data. In FIG. 7, trace data 700 includes a plurality of span data pieces (for example, span data pieces 700-1 to 700-4). Each span data piece is information about the span (processing time) of each workload.

The span data includes information including "trace ID", "service name", "workload", "start time", and "duration", "trace ID" is an identifier uniquely identifying a trace. The trace is a collection of spans of respective workloads of a plurality of microservices implementing a single service. "service name" is the name of the microservice included in the trace.

"workload" is the name of the workload corresponding to the microservice. "start time" indicates time (for example, a date and time) when the workload received a request from the call source. "duration" indicates the length of the span of a workload (in msec). The span of a workload is a processing time from a time point when the workload receives a request from the call source to a time point when the workload returns a response to the call source.

A single trace is formed of a group of span data pieces with the same "trace ID". For example, a single trace is formed of the span data pieces 700-1 to 700-3 with "trace ID" as "4567". For example, the span data piece 700-1 indicates start time "t1" and duration "d1" of MS-A2, which is a workload of MS-A included in the trace with "trace ID" as "4567".

Although not illustrated, the trace data includes, for example, information with which a call relationship between a plurality of microservices (workloads) implementing a single service is identifiable.

(Functional Configuration Example of Delay Cause Identification Device 101)

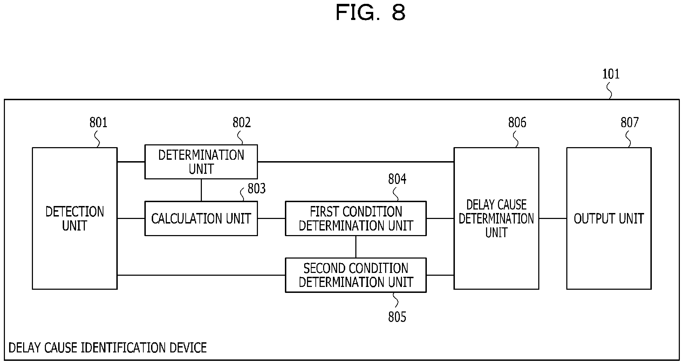

FIG. 8 is a block diagram illustrating a functional configuration example of the delay cause identification device 101. In FIG. 8, the delay cause identification device 101 includes a detection unit 801, a determination unit 802, a calculation unit 803, a first condition determination unit 804, a second condition determination unit 805, a delay cause determination unit 806, and an output unit 807. For example, the functions of the detection unit 801 to the output unit 807 are implemented by the CPU 501 executing programs stored in storage devices such as the memory 502, the disk 504, and the portable recording medium 507 illustrated in FIG. 5 or by means of the communication I/F 505. Processing results of each functional unit are stored in, for example, the storage devices such as the memory 502 and the disk 504.

The detection unit 801 detects a delay in the response time from the call destination microservice to the call source microservice. The call source microservice is any one of a series of microservices implementing a single service. The call destination microservice is a microservice, of the plurality of microservices, called from the call source microservice.

A delay in the response time of the microservice refers to a state in which the response time of the microservice is long enough to exceed an allowable value. For example, the detection unit 801 detects a delay in the response time of the call destination microservice, upon receiving a delay alert of the call destination microservice from the APM system 103.

The delay alert is an alert which is output in case where an abnormality related to a delay in the response time of the microservice is detected in the APM system 103. The delay alert includes, for example, information for identifying the call destination microservice and the call source microservice. The delay alert may include information for identifying a time point when a delay in the response time of the call destination microservice is detected.

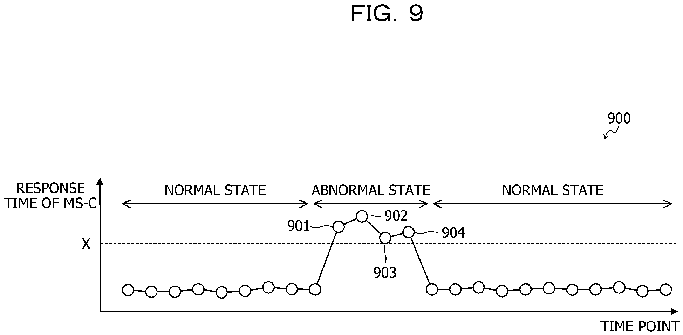

An example of detection of a delay in the response time of a microservice in the APM system 103 will be described with reference to FIG. 9. The call source microservice is assumed to be "MS-B", and the call destination microservice is assumed to be "MS-C".

FIG. 9 is an explanatory diagram illustrating an example of detection of a delay in the response time of a microservice. In FIG. 9, a graph 900 is a line graph illustrating a change in an average response time (may be a maximum response time) of MS-C per unit time over time, monitored in the APM system 103. The average response time of MS-C is an average value of response times of MS-C measured by MS-B, which is the call source.

Each point (for example, points 901 to 904) on the graph 900 corresponds to the average value (may be the maximum value) of the response times of the microservice in each "time window" illustrated in FIG. 6. For example, the APM system 103 outputs the delay alert when the average response time of MS-C exceeds a threshold X a plurality of times. The threshold X may be set to any value (dotted line in FIG. 9).

For example, when the average response time of MS-C exceeds the threshold X a predetermined number of times or more, the APM system 103 may transmit the delay alert to the delay cause identification device 101. When the average response time of MS-C exceeds the threshold X a predetermined consecutive number of times, the APM system 103 may transmit the delay alert to the delay cause identification device 101. The predetermined number of times may be set to be any number of times.

In the example of FIG. 9, the delay alert of MS-C is transmitted from the APM system 103 to the delay cause identification device 101, when the average response time of MS-C exceeds the threshold X four consecutive times. In this case, upon receiving the delay alert of MS-C from the APM system 103, the detection unit 801 detects a delay in the response time from MS-C (call destination) to MS-B (call source) identified from the delay alert.

Referring back to FIG. 8, in response to the detection of the delay in the response time from the call destination microservice to the call source microservice, the determination unit 802 determines whether a processing time of the call destination microservice in a first period is longer than a processing time of the call destination microservice in a second period.

The first period is a period in which the delay in the response time from the call destination microservice to the call source microservice is detected. The second period is a period different from the first period, which is, for example, a period in which no delay in the response time from the call destination microservice to the call source microservice is detected.

The processing time of the microservice is a processing time from a time point when the microservice receives a request from the call source to a time point when the microservice returns a response to the call source. For example, the processing time of the call destination microservice is a processing time from a time point when the workload of the call destination microservice receives a request from the workload of the call source microservice to a time point when the workload of the call destination returns a response to the workload of the call source microservice.

In the following description, the first period in which a delay in the response time from the call destination microservice to the call source microservice is detected may be referred to as "abnormal time slot". The second period in which no delay in the response time from the call destination microservice to the call source microservice is detected may be referred to as "normal time slot". The processing time of the microservice may be referred to as "microservice span".

For example, in response to the detection of the delay in the response time of the call destination microservice, the determination unit 802 acquires, from the APM system 103, the timer data including response time data at the time point when the delay in the response time of the call destination microservice is detected. The timer data is, for example, the timer data 600 illustrated in FIG. 6.

The timer data includes, for example, response time data on a predetermined time slot including a time point when a delay in the response time of the call destination microservice is detected. In the example of the graph 900 illustrated in FIG. 9, the predetermined time slot is, for example, a time slot from a time point several minutes to about an hour earlier than the time point of the point 901 to the time point of the point 904.

In response to the detection of the delay in the response time of the call destination microservice, the determination unit 802 acquires, from the distributed tracing system 104, trace data including span data at the time point when the delay in the response time of the call destination microservice is detected. The trace data is, for example, the trace data 700 illustrated in FIG. 7.

The trace data includes, for example, span data on a predetermined time slot including a time point when a delay in the response time of the call destination microservice is detected. The predetermined time slot is, for example, a time slot that is the same as that of the timer data, and is, for example, a time slot from a time point several tens of minutes to about an hour earlier than the time point of the point 901 to the time point of the point 904.

Next, the determination unit 802 refers to the acquired timer data to identity the abnormal time slot and the normal time slot of the call destination microservice. For example, it is assumed that each response time data in the timer data includes a flag that changes from OFF (0) to ON (1) when the average value (or the maximum value) of the response times of the microservices exceeds the threshold X.

In this case, the determination unit 802 refers to the flag in the response time data of the call destination microservice for which a delay is detected in the timer data, identifies the time slot in which the flag is ON as the abnormal time slot, and identifies the time slot different from the abnormal time slot as the normal time slot.

Alternatively, the determination unit 802 may determine whether the average value of the response time of the call destination microservice for which a delay is detected exceeds the threshold X. The threshold X may be stored in advance in the memory 502 or the disk 504, for example. The determination unit 802 may inquire the APM system 103 of the abnormal time slot of the call destination microservice for which the delay is detected.

Next, with reference to the acquired trace data, the determination unit 802 calculates the processing time of the call destination microservice in the identified abnormal time slot. With reference to the acquired trace data, the determination unit 802 calculates the processing time of the call destination microservice in the identified normal time slot.

"tas" denotes the start time point of the abnormal time slot, and "tae" denotes the end time point of the abnormal time slot. In the following description, the call destination microservice for which the delay is detected may be referred to as "MS-C", and the call source microservice may be referred to as "MS-B". It is assumed that only MS-C has been called by MS-B.

In this case, for example, the determination unit 802 extracts, from the trace data 700, span data in which the "service name" is "MS-C" and that satisfies "start time > tas" and "start time < tae". The target is assumed to be the span data under a call pattern that is the same as that in the case where a delay in the response time of the call destination microservice is detected.

For example, the target of the determination unit 802 is span data in a case where only MS-C has been called by MS-B. The determination unit 802 calculates an average value of "duration" of the extracted span data, to calculate an average Da of the span of MS-C in the abnormal time slot.

The determination unit 802 extracts, from the trace data 700, span data in which the "service name" is "MS-C" and that satisfies "start time < tas" or "start time > tae". The target is assumed to be the span data under a call pattern that is the same as that in the case where a delay in the response time of the call destination microservice is detected. The number of span data pieces extracted is assumed to be sufficiently large (for example, 100 or more).

The determination unit 802 calculates an average value and a standard deviation of "duration" of the extracted span data, to calculate an average Dn and a standard deviation Sn of the span of MS-C in the normal time slot. Next, based on the calculation results thus calculated, the determination unit 802 determines whether the span of MS-C in the abnormal time slot is longer than the span of MS-C in the normal time slot.

For example, the determination unit 802 determines that the span of MS-C in the abnormal time slot is longer than the span of MS-C in the normal time slot when "Da > Dn + 3Sn" holds. On the other hand, the determination unit 802 determines that the span of MS-C in the abnormal time slot is not longer than the span of MS-C in the normal time slot when "Da ≤ Dn + 3Sn" holds.

The delay cause determination unit 806 determines the cause of a response delay of the microservice. For example, the delay cause determination unit 806 may determine that there is a delay (delay cause) in the call destination microservice, upon determining that the span of the microservice in the abnormal time slot is longer than the span of the call destination microservice in the normal time slot.

For example, the delay cause determination unit 806 determines that there is a delay in MS-C from which the delay in the response time to MS-B is detected, when the span in the abnormal time slot is longer than the span in the normal time slot.

On the other hand, the span of the call destination microservice may be regarded as being normal, when the span of the call destination microservice in the abnormal time slot is determined to be not longer than the span of the call destination microservice in the normal time slot. In this case, the delay cause determination unit 806 identifies no delay cause at this time point.

The calculation unit 803 calculates, for each path from the call source microservice to the call destination microservice, statistical values related to the span of the call source microservice. The path is a path from a workload of the call source microservice to a workload of the call destination microservice.

For example, the path is identified by a combination of a workload of the call source microservice (call source workload) and a workload of the call destination microservice (call destination workload). The statistical values of the span of the call source microservice are, for example, the average and the standard deviation of the span, and a call count. The call count is the number of times the call source microservice has called the call destination microservice.

For example, when a delay in the response time from the call destination microservice to the call source microservice is detected, the calculation unit 803 calculates statistical values of the span of the call source workload for each of paths from the call source workload corresponding to the call source microservice to a plurality of call destination workloads corresponding to the call destination microservice.

For example, when the span of the call destination microservice in the abnormal time slot is determined to be no longer than the span of the call destination microservice in the normal time slot, the calculation unit 803 may calculate, for each path, statistical values of the span of the call source workload based on the span of the call source workload in the abnormal time slot.

The call destination microservice for which the delay is detected is assumed to be "MS-C", and the call source microservice is assumed to be "MS-B". In this case, for example, the calculation unit 803 refers to the trace in the abnormal time slot in the trace data 700 to identify a path from a workload of MS-B to a workload of MS-C.

The trace in the abnormal time slot is, for example, trace data including span data with "start time" included in the abnormal time slot. The target is assumed to be the span data under a call pattern that is the same as that in the case where a delay in the response time of MS-C, which is the call destination microservice, is detected.

For example, the workloads of MS-B are assumed to be "MS-B1, MS-B2, and MS-B3", and the workloads of MS-C are assumed to be "MS-C1, MS-C2, and MS-C3". In this case, nine paths between workloads are identified through identification of combinations between the workloads of MS-B and the workloads of MS-C.

Next, with reference to the trace in the abnormal time slot, the calculation unit 803 calculates statistical values of the span of the workloads of MS-B for each path between workloads identified. The statistical values of the span are assumed to be the average and the standard deviation of the span, and the call count. Based on the calculation results thus calculated, the calculation unit 803 generates a path based transmission source span statistical table.

The path based transmission source span statistical table is information indicating the statistical values of the spans of the call source workloads, for each path between the workloads (call source workloads) of the call source microservice and the workloads (call destination workloads) of the call destination microservice. A specific example of the path based transmission source span statistical table will be described.

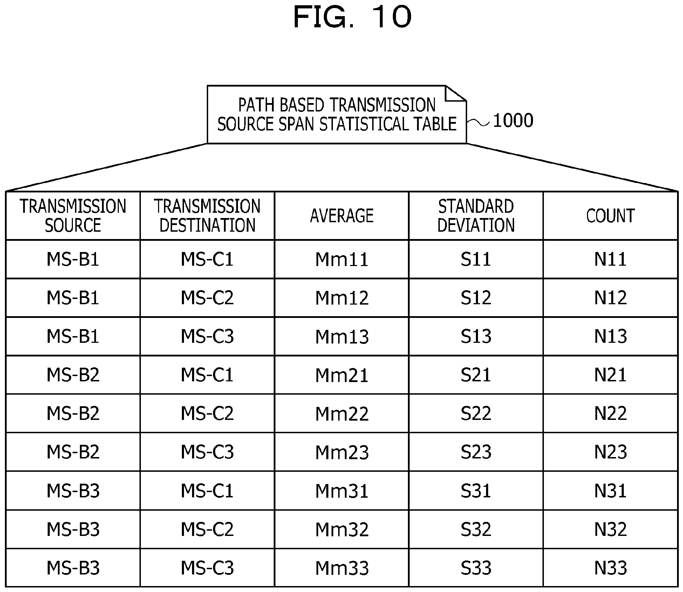

FIG. 10 is an explanatory diagram illustrating a specific example of the path based transmission source span statistical table. In FIG. 10, a path based transmission source span statistical table 1000 is information indicating statistical values of the spans of the workloads of MS-B for each path between the workloads of MS-B, which is the call source, and the workloads of MS-C, which is the call destination.

The transmission source indicates a workload of the call source microservice. The transmission destination indicates a workload of the call destination microservice. The average indicates an average of the span of a workload of MS-B. The standard deviation indicates the standard deviation of the span of a workload of MS-B. The count indicates a call count to a workload of MS-C from a workload of MS-B.

For example, in an example path from MS-B1 to MS-C1, the average of the span of MS-B1 is "Mm11", the standard deviation of the span of MS-B1 is "S11", the call count from MS-B1 to MS-C1 is "N11".

Referring back to FIG. 8, the first condition determination unit 804 determines, based on the statistical values calculated for each path, whether there exists a call destination workload common to paths involving a relatively long span of the call source microservice among the identified paths. For example, the first condition determination unit 804 focuses on one workload of the call destination microservice and determines whether the span of the call source microservice with the workload is significantly longer than the span with the other workloads.

For example, the first condition determination unit 804 refers to the path based transmission source span statistical table generated, and calculates a statistic amount t for each workload of the call destination microservice by using the following Equation (1). In the following description, the focused workload of the call destination microservice may be referred to as "target workload".

[Equation 1]

$$t = \frac{\bar{x} - \bar{y}}{\sqrt{\dfrac{s_x^2}{m} + \dfrac{s_y^2}{n}}} \quad \dots (1)$$

In the above Equation (1), x~ represents an average of the average of the span of the workload of the call source microservice, when the workload of the call destination microservice is the target workload. "~" in #~ represents a bar provided over #. y~ represents an average of the average of the span of the workload of the call source microservice, when the workload of the call destination microservice is a workload other than the target workload. $s_x$ represents the combination of the standard deviations of the spans of the workloads of the call source microservice, when the workload of the call destination microservice is the target workload. $s_y$ represents the combination of the standard deviations of the spans of the workloads of the call source microservice, when the workload of the call destination microservice is a workload other than the target workload. m represents the total call count when the workload of the call destination microservice is the target workload. n represents the total call count when the workload of the call destination microservice is a workload other than the target workload.

For example, "MS-C2" is assumed to be the target workload. In this case, x~ is the average of Mm12, M22, and Mm32. y~ is the average of Mm other than Mm12, M22, and Mm32. $s_x$ is the combination of S12, S22, and S32. $s_y$ is the combination of S other than S12, S22, and S32. m is the sum of N12, N22, and N32. n is the sum of N other than N12, N22, and N32.

Next, the first condition determination unit 804 calculates a p value of a t distribution based on the calculated statistic amount t. The p value is a significant probability. The p value may be calculated by using, for example, a function of existing spreadsheet software such as a T.DIST.2T function. When the p value is smaller than a significance level, it may be regarded that there is no difference between x~ and y~.

For example, the significance level is 5%. In this case, if the p value when the target workload is "MS-C2" satisfies "p < 0.05", it may be regarded that there is no significant difference between x~ and y~. For example, when "p < 0.05" holds, the span of the call source microservice when the target workload is "MS-C2" may not be regarded as being significantly long.

On the other hand, if the p value when the target workload is "MS-C2" satisfies "p ≥ 0.05", it may be regarded that there is a significant difference between x~ and y~. For example, when "p ≥ 0.05" holds, the span of the call source microservice when the target workload is "MS-C2" may be regarded as being significantly long.

In this case, the first condition determination unit 804 determines that there exists a call destination workload (MS-C2) common to paths involving a significantly long span of the call source microservice (MS-B). If the span of the call source microservice (MS-B) when the target workload is MS-C2 may be regarded as being significantly long, a delay may be estimated to be in the network between the call source microservice and MS-C2 or in MS-C2.

For all workloads of the call destination microservice, the p value may not satisfy "p < 0.05", for example, the span of the call source microservice may not be regarded as being significantly long. In this case, the first condition determination unit 804 determines that there is no call destination microservice that is common to paths involving a significantly long span of the call source microservice.

The second condition determination unit 805 determines whether or not a first difference and a second difference are within a predetermined range. The first difference is a difference in the average value of the span of the call source microservice between an abnormal state and a normal state. The second difference is a difference in the average value of the response time from the call destination microservice to the call source microservice, between the abnormal state and the normal state. The predetermined range may be set to any range. For example, the predetermined range is set to a range with which the first difference and the second difference are able to be regarded as being the same.

The average value of the span of the call source microservice in the abnormal state is calculated, for example, from the span of the call source microservice in the abnormal time slot. The average value of the span of the call source microservice in the normal state is calculated, for example, from the span of the call source microservice in the normal time slot.

The average value of the response time of the call destination microservice in the abnormal state is calculated, for example, from the response time of the call destination microservice in the abnormal time slot. The average value of the response time of the call destination microservice in the normal state is calculated, for example, from the response time of the call destination microservice in the normal time slot.

In some cases, the first condition determination unit 804 may identify the call destination workload common to paths involving a long span of the call source microservice. In such cases, the second condition determination unit 805 may calculate the average value of the span of the call source microservice in the abnormal state while taking the path including the identified call destination workload into consideration, by referring to the path based transmission source span statistical table.

An example of specific processing of calculating the first difference and the second difference will be described later.

Whether or not the first difference and the second difference are within the predetermined range may be determined using a known test for average values (two sided test), for example. For example, based on the first difference and the second difference calculated, the second condition determination unit 805 determines whether the first difference and the second difference are within the predetermined range by using the following Equation (2).

[Equation 2]

$$t = \frac{(\bar{x} - \mu)\sqrt{n}}{s} \quad \ldots (2)$$

In the above Equation (2), x~ represents a sample average. $\mu$ represents a population average. n represents the number of samples. s represents a sample standard deviation. For example, the second condition determination unit 805 uses the sample average as the first difference and uses the population average as the second difference. The number of samples is, for example, the number of spans used to calculate the first difference. The sample standard deviation is calculated, for example, from the span used to calculate the first difference.

Next, the second condition determination unit 805 calculates a p value of a t distribution based on the calculated statistic amount t. When the p value is smaller than a significance level, it may be regarded that there is no difference between x~ and $\mu$. The p value may be calculated by using, for example, a function of existing spreadsheet software such as a T.DIST.2T fu nction.

For example, the significance level is 5%. In this case, when the p value satisfies "$p < 0.05$", it may be regarded that there is no significant difference between x~ and $\mu$. Therefore, when "$p < 0.05$" holds, the second condition determination unit 805 determines that the first difference and the second difference are the same (within the predetermined range). On the other hand, when "$p \geq 0.05$" holds, the second condition determination unit 805 determines that the first difference and the second difference are not the same (outside the predetermined range).

The delay cause determination unit 806 determines that there is a delay in the network related to the call destination microservice or in the call destination microservice, when the first condition determination unit 804 determines that there exists a common call destination workload, and the second condition determination unit 805 determines that the first difference and the second difference are within the predetermined range.

As described above, the delay cause determination unit 806 determines that there is a delay in the call destination microservice, when the determination unit 802 determines that the span of the microservice in the abnormal time slot is longer than the span of the call destination microservice in the normal time slot for example. For example, when the span of the microservice in the abnormal time slot is not determined to be longer than the span of the call destination microservice in the normal time slot, the delay cause determination unit 806 determines that a common call destination workload exists, and when the first difference and the second difference are determined to be within the predetermined range, the delay cause determination unit 806 determines that there is a delay in the network related to the call destination microservice.

When the first condition determination unit 804 determines that there is no common call destination microservice, the delay cause determination unit 806 determines that a delay may not be regarded as being in the network related to the call destination microservice.

When the second condition determination unit 805 determines that the first difference and the second difference are outside the predetermined range, the delay cause determination unit 806 determines that a delay may not be regarded as being in the network related to the call destination microservice.

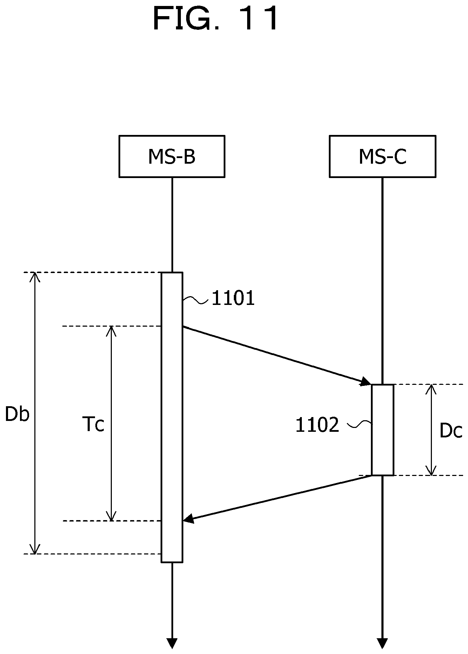

An example of determination of the cause of the response delay of the microservice will be described later with reference to FIG. 11.

The output unit 807 outputs a result of the determination by the delay cause determination unit 806. The output from the output unit 807 may be implemented in a form including, for example, storing into the storage devices such as the memory 502 and the disk 504, transmitting from the communication I/F 505 to other computers, displaying on a display not illustrated, and outputting to a printer not illustrated for printing.

For example, the output unit 807 may transmit a delay cause determination result to the operator terminal 105 illustrated in FIG. 1. The delay cause determination result is information indicating a result of determining the cause of the response delay of the microservice. The operator of the service may confirm the cause of the response delay of the microservice by referring to the delay cause determination result on the operator terminal 105.

For example, it is assumed that a delay is determined to be in a network related to the call destination microservice. In this case, the delay cause determination result is information indicating that there is a delay in the network related to the call destination microservice. The delay cause determination result includes, for example, information identifying a workload of a call destination microservice common to paths involving a significantly long span of the call source microservice. The delay cause determination result may include information identifying a workload of the call source microservice.

Each functional unit of the delay cause identification device 101 described above may be implemented by a plurality of computers (for example, the delay cause identification device 101 and the processing devices 102) in the information processing system 100.

(Example of Processing of Calculating First Difference and Second Difference)

An example of processing of calculating the first difference and the second difference will be described. First of all, a specific example of processing of calculating the first difference will be described. The call destination microservice for which a delay is detected is assumed to be "MS-C", and the call source microservice is assumed to be "MS-B".

In this case, the second condition determination unit 805 extracts, from the trace data 700 (see FIG. 7), span data with the service name being MS-B and with the start time being included in the abnormal time slot. The target is assumed to be the span data under a call pattern (MS-B => MS-C) that is the same as that in the case where a delay in the response time of MS-C is detected. Next, the second condition determination unit 805 calculates an average value E(Xd) of the span of MS-B in the abnormal state, by obtaining an average of duration in the span data extracted.

The second condition determination unit 805 extracts, from the trace data 700, span data with the service name being MS-B and with the start time being included in the normal time slot. The target is assumed to be the span data under a call pattern (MS-B => MS-C) that is the same as that in the case where a delay in the response time of MS-C is detected. Next, the second condition determination unit 805 calculates an average value E(Xn) of the span of MS-B in the normal state, by obtaining an average of durations in the span data extracted.

The second condition determination unit 805 calculates the first difference (E(Xd) - E(Xn)) by subtracting the average value E(Xn) from the calculated average value E(Xd).

In some cases, a workload of MS-C that is common to paths involving a long span of MS-B may be identified. For example, it is assumed that "MS-C2" is identified as a workload of MS-C common to paths involving a significantly long span of MS-B. In this case, the second condition determination unit 805 may calculate the average value E(Xd) of the span of MS-B in the abnormal state, while taking the path including MS-C2 into consideration.

For example, with reference to the path based transmission source span statistical table 1000, the second condition determination unit 805 calculates a rate a1 at which MS-C2 is called and a rate a2 at which a workload other than MS-C2 is called, by using the following Equations (3) and (4).

[Equation 3]

$$a1 = (N12 + N22 + N23)/(\text{sum of } N11 \text{ to } N33) \; ... \; (3)$$

[Equation 4]

$$a2 = 1 - a1 \; ... \; (4)$$

The second condition determination unit 805 calculates an average value e(Xd) of the span of MS-B in a case where MS-C2 is called, with reference to the path based transmission source span statistical table 1000. The average value e(Xd) is the average of Mm12, Mm22, and Mm32.

The second condition determination unit 805 calculates an average value e(Xn) of the span of MS-B in a case where MS-C2 is not called, with reference to the path based transmission source span statistical table 1000. The average value e(Xn) is the average of Mm11, Mm13, Mm21, Mm23, M31, and Mm33.

The second condition determination unit 805 calculates the average value E(Xd) of the span of MS-B in the abnormal state, by using the following Equation (5).

[Equation 5]

$$E(Xd) = a1 \times e(Xd) + a2 \times e(Xn) \; ... \; (5)$$

Thus, in a case where MS-C2 common to the paths involving a long span of MS-B is identified, the average value E(Xd) of the span of MS-B in the abnormal state may be calculated, with a span in a case of calling MS-C2 regarded as a span in an abnormal state and with a span in a case of calling a workload other than MS-C2 regarded as a span in a normal state.

In the above description, the average value E(Xn) of the span of MS-B in the normal state is calculated from duration in the span data with the start time included in the normal time slot, but this is not to be construed in a limiting sense. For example, as the average value E(Xn) of the span of MS-B in the normal state, an average value e(Xn) of the span of MS-B in a case where MS-C2 is not called in the abnormal time slot may be used. For example, in a case where MS-C2 common to the paths involving a long span of MS-B is identified, the average value E(Xn) of the span of MS-B in the normal state may be obtained with the span in a case of calling a workload other than MS-C2 regarded as the span in the normal state.

Next, a specific example of processing of calculating the second difference will be described. The call destination microservice for which a delay is detected is assumed to be "MS-C", and the call source microservice is assumed to be "MS-B".

The second condition determination unit 805 extracts, from the timer data 600, the response time data with "service" being MS-C and with "time window" being included in the abnormal time slot, for example. Next, the second condition determination unit 805 calculates an average value Tmd of the response time of the call destination microservice in the abnormal state, by calculating an average of "mean" in the extracted response time data.

The second condition determination unit 805 extracts, from the timer data 600, the response time data with "service" being MS-C and with "time window" being included in the normal time slot. Next, the second condition determination unit 805 calculates an average value Tmn of the response time of the call destination microservice in the normal state, by calculating an average of "mean" in the extracted response time data.

The second condition determination unit 805 calculates a second difference (Tmd - Tmn) by subtracting the average value Tmn from the calculated average value Tmd.

(Example of Determination of Cause of Response Delay of Microservice)

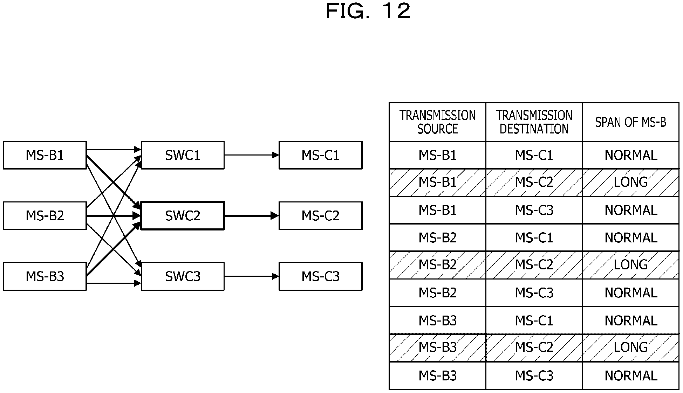

Next, an example of determination of the cause of the response delay of the microservice will be described with reference to FIGs. 11 and 12. The call destination microservice for which a delay is detected is assumed to be "MS-C", and the call source microservice is assumed to be "MS-B".

FIG. 11 is an explanatory diagram illustrating a relationship between spans and a response time of the microservice. In FIG. 11, bars 1101 and 1102 representing spans Db and Dc of MS-B and MS-C are illustrated on the axis representing time. Tc represents a response time from MS-C to MS-B.

The delay cause determination unit 806 determines that the network is the cause of the delay when the span Dc of MS-C in the abnormal state (delay in the response time of MS-C) is not longer than that in the normal state and the span Db of MS-B is as long as the response time Tc from MS-C to MS-B.

On the other hand, it is determined that the network may not be regarded as the cause of the delay when the span Dc of MS-C in the abnormal state (delay in the response time of MS-C) is not longer than that in the normal state and the span Db of MS-B is not as long as the response time Tc from MS-C to MS-B.

The delay cause determination unit 806 determines that the cause of the delay is MS-C when the span Dc of MS-C in the abnormal state (delay in the response time of MS-C) is longer than that in the normal state.

FIG. 12 is an explanatory diagram illustrating a length of a span for each path between workloads. FIG. 12 illustrates paths between workloads of MS-B to workloads of MS-C, and the length of the span (the span of MS-B) for each of the paths between the workloads. A span "NORMAL" indicates a span that may not be regarded as being significantly longer than that for the other paths. A span "LONG" indicates a span that is significantly longer than that for the other paths.

In the example in FIG. 12, there is MS-C2 that is common to paths in which the span of MS-C is not longer and the span of MS-B is longer than those in the normal state. The first difference in the average value of the span of MS-B between the abnormal state and the normal state and the second difference in the average value of the response time from MS-C to MS-B between the abnormal state and the normal state are within the predetermined range. In this case, the delay cause identification device 101 determines that there is a delay in the network related to MS-C2.

For example, the delay cause identification device 101 transmits a delay cause determination result indicating that there is a delay in the network related to MS-C2, to the operator terminal 105. Thus, the operator of the service may identify that there is a cause of the delay in the network (such as the physical SW or the virtual SW) related to MS-C2, by referring to the delay cause determination result.

(Delay Cause Identification Processing Procedure of Delay Cause Identification Device 101)

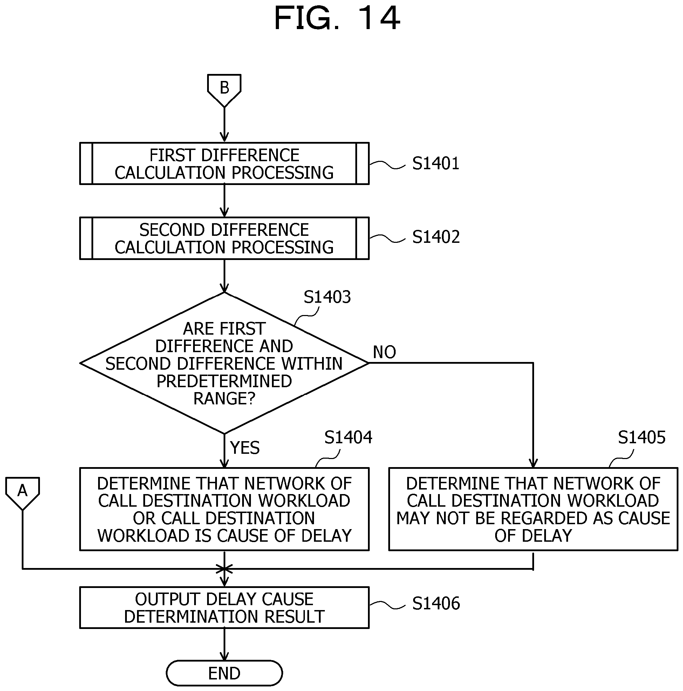

Next, a delay cause identification processing procedure of the delay cause identification device 101 will be described. First, a first delay cause identification processing procedure of the delay cause identification device 101 will be described with reference to FIGs. 1 and 14. In first delay cause identification processing, a case is described where whether the cause of the delay is the call destination microservice is not determined.

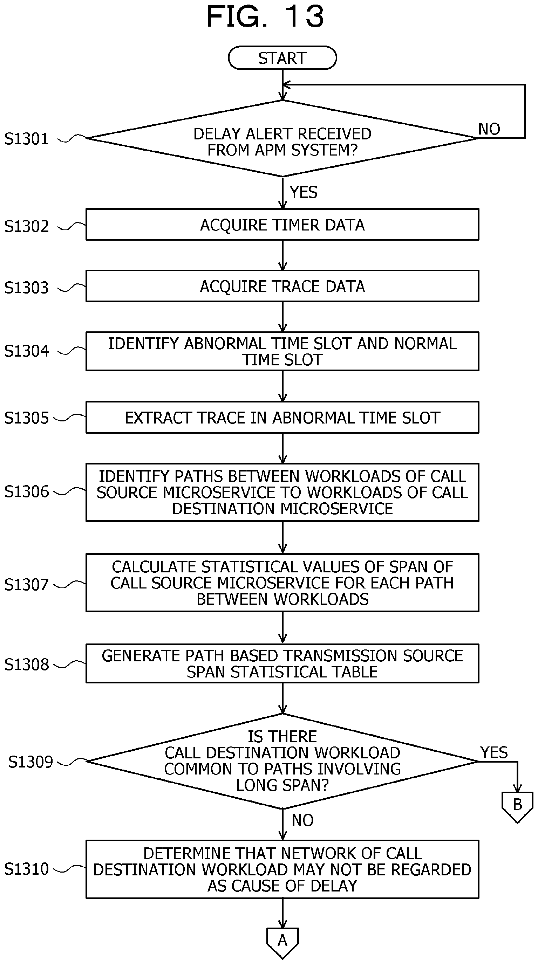

FIGs. 13 and 14 are flowcharts illustrating an example of the first delay cause identification processing procedure of the delay cause identification device 101. In the flowchart illustrated in FIG. 13, the delay cause identification device 101 determines whether a delay alert of a call destination microservice has been received from the APM system 103 (step S1301).

The delay cause identification device 101 waits until the delay alert is received (step S1301: No). Upon receiving the delay alert (step S1301: Yes), the delay cause identification device 101 acquires timer data including response time data at a point when the delay in the response time of the call destination microservice is detected from the APM system 103 (step S1302).

Next, the delay cause identification device 101 acquires, from the distributed tracing system 104, trace data including span data at a point when the delay in the response time of the call destination microservice is detected (step S1303).

The delay cause identification device 101 refers to the acquired timer data to identify the abnormal time slot and the normal time slot of the call destination microservice (step S1304). Next, the delay cause identification device 101 extracts a trace in the abnormal time slot from the trace data (step S1305).

The delay cause identification device 101 refers to the trace in the abnormal time slot thus extracted, and identifies paths between workloads of the call source microservice to workloads of the call destination microservice (step S1306). The delay cause identification device 101 refers to the trace in the abnormal time slot and calculates statistical values of the span of the call source microservice for each of the identified paths between the workloads (step S1307).

The delay cause identification device 101 generates a path based transmission source span statistical table based on the calculation results thus calculated (step S1308). Next, the delay cause identification device 101 refers to the generated path based transmission source span statistical table and determines whether there exists a call destination workload common to paths involving a significantly long span of the call source microservice among the identified paths (step S1309).

When there is no such a call destination workload (step S1309: No), the delay cause identification device 101 determines that the network of the call destination workload may not be regarded as the cause of the delay (step S1310), and proceeds to step S1406 illustrated in FIG. 14.

On the other hand, when there is such a call destination workload (step S1309: Yes), the delay cause identification device 101 proceeds to step S1401 illustrated in FIG. 14.

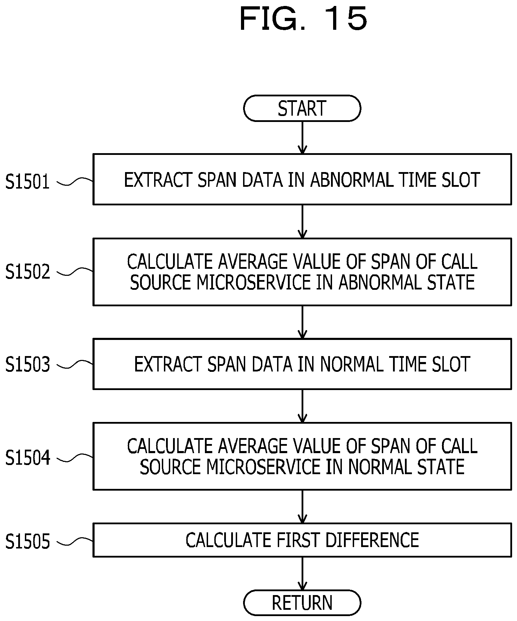

In the flowchart in FIG. 14, first, the delay cause identification device 101 executes first difference calculation processing of calculating the first difference in the average value of the span of the call source microservice between the abnormal state and the normal state (step S1401). Note that, a specific processing procedure of the first difference calculation processing will be described later with reference to FIG. 15.

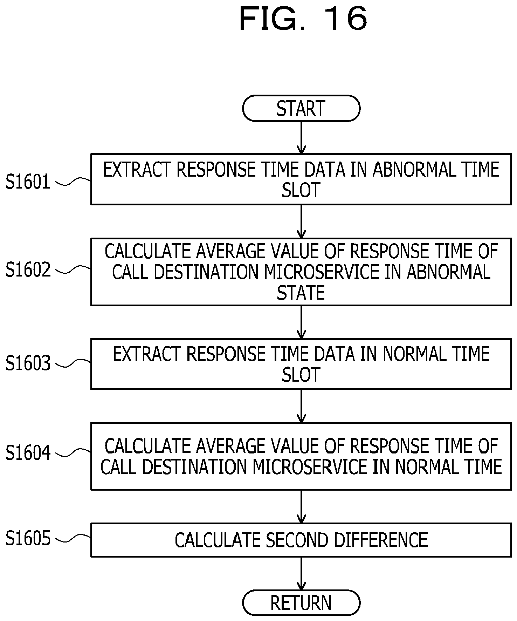

Next, the delay cause identification device 101 executes second difference calculation processing of calculating the second difference in the average value of the response time from the call destination microservice to the call source microservice between the abnormal state and the normal state (step S1402). Note that, a specific processing procedure of the second difference calculation processing will be described later with reference to FIG. 16.

Next, the delay cause identification device 101 determines whether the first difference and the second difference calculated are within the predetermined range (step S1403). Upon determining that the first difference and the second difference are within the predetermined range (step S1403: Yes), the delay cause identification device 101 determines that the network of the call destination workload or the call destination workload is the cause of the delay (step S1404), and proceeds to step S1406.

On the other hand, upon determining that the first difference and the second difference are not within the predetermined range (step S1403: No), the delay cause identification device 101 determines that the network of the call destination workload may not be regarded as the cause of the delay (step S1405). The delay cause identification device 101 outputs a delay cause determination result (step S1406), and ends the series of processes according to the flowchart.

This enables the operator of the service or the like to be provided with information (delay cause determination result) with which the cause of the response delay of the microservice is identifiable.

Next, a specific processing procedure of the first difference calculation processing in step S1401 illustrated in FIG. 14 will be described with reference to FIG. 15.

FIG. 15 is a flowchart illustrating an example of the specific processing procedure of the first difference calculation processing. In the flowchart in FIG. 15, the delay cause identification device 101 extracts span data on the call source microservice in the abnormal time slot, from the acquired trace data (step S1501). Based on the extracted span data, the delay cause identification device 101 calculates an average value of the span of the call source microservice in the abnormal state (step S1502).

Next, the delay cause identification device 101 extracts span data on the call source microservice in the normal time slot, from the trace data (step S1503). Based on the extracted span data, the delay cause identification device 101 calculates an average value of the span of the call source microservice in the normal state (step S1504).

The delay cause identification device 101 calculates the first difference by subtracting the average value in the normal state from the calculated average value in the abnormal state (step S1505), and returns to the step where the first difference calculation processing is called.

Thus, the difference (first difference) in the average value of the span of the call source microservice between the abnormal state and the normal state may be calculated.

Next, a specific processing procedure of the second difference calculation processing in step S1402 illustrated in FIG. 14 will be described with reference to FIG. 16.

FIG. 16 is a flowchart illustrating an example of the specific processing procedure of the second difference calculation processing. In the flowchart illustrated in FIG. 16, first of all, the delay cause identification device 101 extracts, from the acquired timer data, response time data on the call destination microservice in the abnormal time slot (step S1601). Based on the extracted response time data, the delay cause identification device 101 calculates an average value of the response time of the call destination microservice in the abnormal state (step S1602).

Next, the delay cause identification device 101 extracts, from the timer data, response time data on the call destination microservice in the normal time slot (step S1603). Based on the extracted response time data, the delay cause identification device 101 calculates an average value of the response time of the call destination microservice in the normal state (step S1604).

The delay cause identification device 101 calculates the second difference by subtracting the calculated average value in the normal state from the calculated average value in the abnormal state (step S1605), and returns to the step where the second difference calculation processing is called.

Thus, the difference (second difference) in the average value of the response time from the call destination microservice to the call source microservice between the abnormal state and the normal state may be calculated.

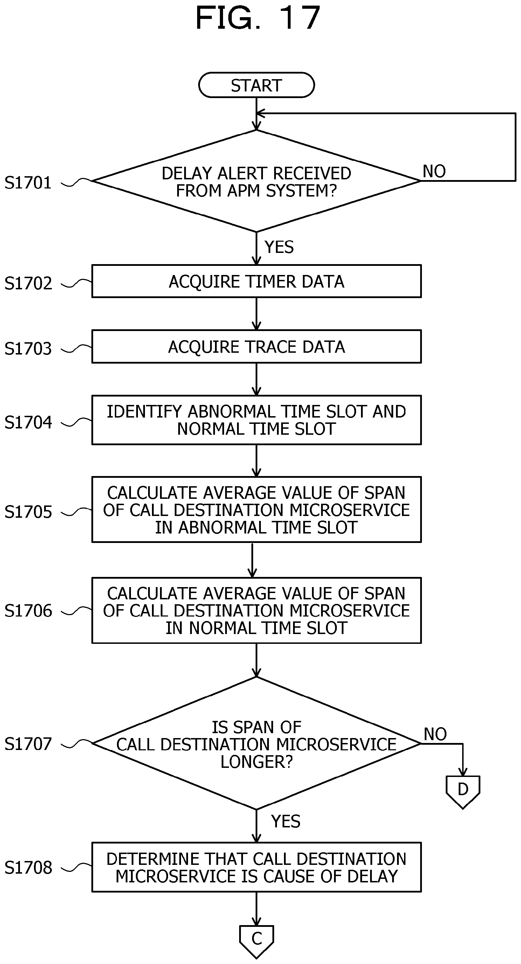

Next, a second delay cause identification processing procedure by the delay cause identification device 101 will be described with reference to FIGs. 17 to 19. In second delay cause identification processing, a case is described where whether the cause of the delay is the call destination microservice is determined.

FIGs. 17 to 19 are flowcharts illustrating an example of the second delay cause identification processing procedure of the delay cause identification device 101. In the flowchart illustrated in FIG. 17, first, the delay cause identification device 101 determines whether a delay alert of a call destination microservice has been received from the APM system 103 (step S1701).

The delay cause identification device 101 waits until the delay alert is received (step S1701: No). Upon receiving the delay alert (step S1701: Yes), the delay cause identification device 101 acquires timer data including response time data at a point when the delay in the response time of the call destination microservice is detected from the APM system 103 (step S1702).

Next, the delay cause identification device 101 acquires, from the distributed tracing system 104, trace data including span data at a point when the delay in the response time of the call destination microservice is detected (step S1703).

The delay cause identification device 101 identifies the abnormal time slot and the normal time slot of the call destination microservice by referring to the acquired timer data (step S1704). Next, the delay cause identification device 101 calculates an average value of the span of the call destination microservice in the identified abnormal time slot by referring to the acquired trace data (step S1705).

Next, the delay cause identification device 101 calculates an average value of the span of the call destination microservice in the identified normal time slot by referring to the acquired trace data (step S1706). The delay cause identification device 101 determines, based on the calculation results thus calculated, whether the span of the call destination microservice in the abnormal time slot is longer than the span of the call destination microservice in the normal time slot (step S1707).

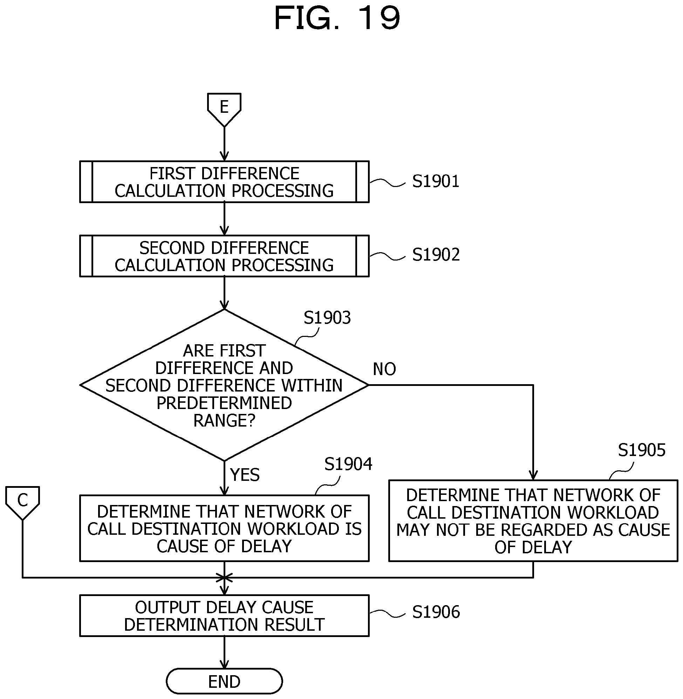

When the span of the call destination microservice is longer (step S1707: Yes), the delay cause identification device 101 determines that the call destination microservice is the cause of the delay (step S1708), and proceeds to step S1906 illustrated in FIG. 19.

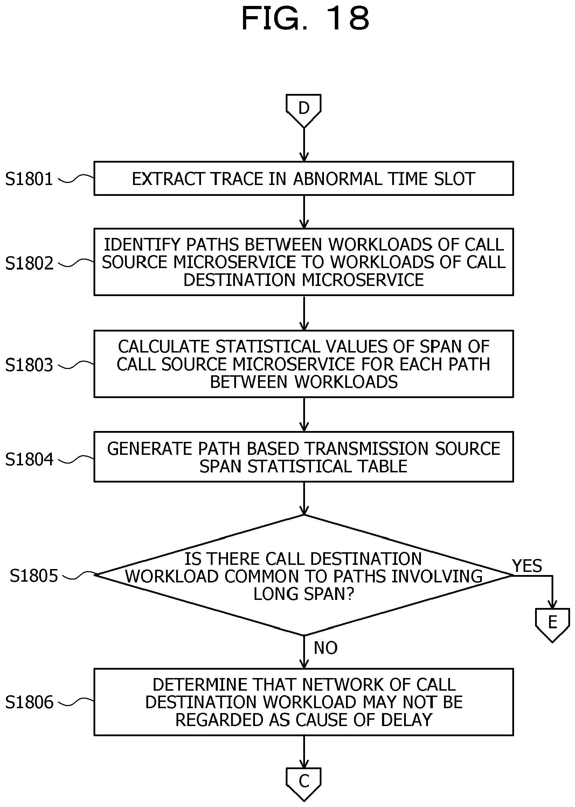

On the other hand, when the span of the call destination microservice is not longer (step S1707: No), the delay cause identification device 101 proceeds to step S1801 illustrated in FIG. 18.

In the flowchart in FIG. 18, first, the delay cause identification device 101 extracts a trace in the abnormal time slot from the trace data (step S1801). The delay cause identification device 101 refers to the trace in the abnormal time slot thus extracted, and identifies paths between workloads of the call source microservice to workloads of the call destination microservice (step S1802).

The delay cause identification device 101 refers to the trace in the abnormal time slot and calculates statistical values of the span of the call source microservice for each of the identified paths between the workloads (step S1803). The delay cause identification device 101 generates a path based transmission source span statistical table based on the calculation results thus calculated (step S1804).

Next, the delay cause identification device 101 refers to the generated path based transmission source span statistical table and determines whether there exists a call destination workload common to paths involving a significantly long span of the call source microservice among the identified paths (step S1805).

When there is no such a call destination workload (step S1805: No), the delay cause identification device 101 determines that the network of the call destination workload may not be regarded as the cause of the delay (step S1806), and proceeds to step S1906 illustrated in FIG. 19.

On the other hand, when there is such a call destination workload (step S1805: Yes), the delay cause identification device 101 proceeds to step S1901 illustrated in FIG. 19.

In the flowchart in FIG. 19, first, the delay cause identification device 101 executes first difference calculation processing of calculating the first difference in the average value of the span of the call source microservice between the abnormal state and the normal state (step S1901). The specific processing procedure of the first difference calculation processing is the same as that of the processing procedure described with reference to FIG. 15, and thus will not be illustrated or described.

Next, the delay cause identification device 101 executes second difference calculation processing of calculating the second difference in the average value of the response time from the call destination microservice to the call source microservice between the abnormal state and the normal state (step S1902). The specific processing procedure of the second difference calculation processing is the same as that of the processing procedure described with reference to FIG. 16, and thus will not be illustrated or described.

Next, the delay cause identification device 101 determines whether the first difference and the second difference calculated are within the predetermined range (step S1903). Upon determining that the first difference and the second difference are within the predetermined range (step S1903: Yes), the delay cause identification device 101 determines that the network of the call destination workload is the cause of the delay (step S1904), and proceeds to step S1906.

On the other hand, upon determining that the first difference and the second difference are not within the predetermined range (step S1903: No), the delay cause identification device 101 determines that the network of the call destination workload may not be regarded as the cause of the delay (step S1905). The delay cause identification device 101 outputs a delay cause determination result (step S1906), and ends the series of processes according to the flowchart.

This enables the operator of the service or the like to be provided with information (delay cause determination result) with which the cause of the response delay of the microservice is identifiable, including whether the call destination microservice is the cause of the delay.

As described above, with the delay cause identification device 101 according to the embodiment, when a delay in the response time from the call destination microservice to the call source microservice is detected, it is possible to calculate statistical values of the span of the call source workload for each of the paths from the call source workload corresponding to the call source microservice to a plurality of call destination workloads corresponding to the call destination microservice. With the delay cause identification device 101, based on the statistical values calculated for each path, it is possible to determine whether there exists a call destination workload common to paths involving a relatively long span of the call source microservice among the paths.

Thus, when a delay in the response time of the microservice is detected using the APM timer, it is possible to estimate whether the cause of the delay is in the network. For example, when there exists a call destination workload common to paths involving a long span of a call source microservice, it is possible to estimate that a cause of the delay is in the network or the call destination microservice.

The delay cause identification device 101 may determine whether the first difference in the average value of the span of the call source microservice between the abnormal state and the normal state and the second difference in the average value of the response time from the call destination microservice to the call source microservice between the abnormal state and the normal state are within the predetermined range.

Thus, it is possible to verify that a delay is in the network, based on the fact that the span of the call source microservice and the response time of the call destination microservice are not equally increased in the abnormal state, if the cause of the delay is in processing on the call source microservice itself.

With the delay cause identification device 101, it is possible to determine that the network related to the call destination microservice or the call destination microservice is the cause of the delay, when it is determined that there exists a common call destination workload and that the first difference and the second difference are within the predetermined range.

Thus, when the cause of the delay may be estimated to be in the network, it is possible to determine that the cause of the delay is in the network or in the call destination microservice, if the span of the call source microservice and the response time of the call destination microservice in the abnormal state are equally increased.

With the delay cause identification device 101, it is possible to determine whether the span of the call destination microservice in the abnormal time slot is longer than the span of the call destination microservice in the normal time slot. With the delay cause identification device 101, it is possible to determine that the call destination microservice is the cause of the delay, when the span of the call destination microservice is determined to be longer. The abnormal time slot is a period in which the delay in the response time from the call destination microservice to the call source microservice is detected. The normal time slot is a period different from the abnormal time slot.

Thus, when the delay in the response time of the microservice is detected using the APM timer, with the processing time of the call destination microservice being longer, it is possible to determine that the cause of the delay is in the processing on the call destination microservice itself.

With the delay cause identification device 101, when the span of the call destination microservice is not determined to be longer, the statistical values of the span of the call source workload may be calculated for each path based on the span of the call source workload in the abnormal time slot.

Thus, when the delay in the response time of the microservice is detected using the APM timer, if the processing on the call destination microservice itself may be regarded as being devoid of any cause of the delay, it is possible to estimate whether the cause of the delay is in the network.

With the delay cause identification device 101, when it is determined that there is no common call destination workload, it is possible to determine that the network related to the call destination microservice is not the cause of the delay.

Thus, when the delay in the response time of the microservice is detected using the APM timer, with no call destination microservice common to paths involving a long span of the call source microservice, it is possible to determine that the cause of the delay may not be regarded as being in the network.

With the delay cause identification device 101, when the first difference and the second difference are not determined to be within the predetermined range, it is possible to determine that the network related to the call destination microservice is not the cause of the delay.

Thus, it is possible to determine that the cause of the delay may not be regarded as being in the network, when the span of the call source microservice and the response time of the call destination microservice are not equally increased in the abnormal state.

With the delay cause identification device 101, it is possible to output the delay cause determination result determined.

This enables the operator of the service or the like to be provided with information with which the cause of the response delay of the microservice is identifiable.

With the delay cause identification device 101, based on the statistical values calculated for each path, it is possible to determine whether there exists a call destination workload common to paths involving a significantly long span of the call source microservice among the paths. With the delay cause identification device 101, when it is determined that there exists a common call destination workload and that the first difference and the second difference are within the predetermined range, the network related to the common call destination workload may be determined to be the cause of the delay.

Thus, even when there are multiple workloads of the call destination microservice, it is possible to identify a workload in a network causing a delay.

In view of the foregoing, with the delay cause identification method and the delay cause identification program according to the embodiment, it is possible to improve accuracy in identifying a cause of a response delay in a service, and it is possible to reduce a workload and a work time for investigating the cause of the response delay in the microservice architecture.

The delay cause identification processing may be started at a timing when the delay in the response time of the microservice is detected using the APM timer, whereby the cause may be investigated in real time. The cost for investigating the cause of the response delay may be reduced from that in a case of packet analysis or the like using a packet capture technique. Even a person who is incapable of directly viewing metrics stored in a switch or the like on a communication path may identify a response delay by using metrics generally collected for performance monitoring, whereby usability may be improved.

The delay cause identification method described in the embodiment may be implemented by executing a program prepared in advance on a computer such as a personal computer or a workstation. The delay cause identification program is recorded on a computer-readable recording medium such as a hard disk, a flexible disk, a CD-ROM, a DVD, or a USB memory and is executed as a result of being read from the recording medium by a computer. The delay cause identification program may be distributed via a network such as the Internet.

The delay cause identification device 101 described in the embodiment may also be implemented by an application-specific integrated circuit (IC), such as a standard cell or a structured application-specific integrated circuit (ASIC), or by a programmable logic device (PLD), such as a field-programmable gate array (FPGA).

**Claims**

1. A delay cause identification method comprising:

   when a delay in a response time from a call destination microservice to a call source microservice is detected, calculating a statistical value of a processing time of a call source workload for each of paths from the call source workload corresponding to the call source microservice to a plurality of call destination workloads corresponding to the call destination microservice; and
   first determining whether or not a first condition which there exists a call destination workload common to paths involving a first processing time of the call source microservice among the paths is satisfied, based on the statistical value;
   second determining whether or not a second condition which a first difference and a second difference are within a predetermined range is satisfied, the first difference being a difference in a first average value of the processing time of the call source microservice between an abnormal state and a normal state, the second difference being difference in a second average value of a response time from the call destination microservice to the call source microservice between the abnormal state and the normal state; and
   third determining that a network related to the call destination microservice or the call destination microservice is a cause of the delay, when the first condition and the second condition are satisfied.

**2.** The delay cause identification method according to claim 1, wherein the first determining includes
determining whether the first processing time of the call destination microservice in a first period in which the delay in the response time from the call destination microservice to the call source microservice is detected is longer than a second processing time of the call destination microservice in a second period that is different from the first period.

**3.** The delay cause identification method according to claim 2, wherein the calculating includes:
calculating the statistical value of the processing time of the call source workload for each of the paths based on the processing time of the call source workload in the first period when the first processing time is not determined to be longer than the second processing time.

**4.** The delay cause identification method according to any one of claims 1 to 3, wherein
the third determining includes:
determining that the network related to the call destination microservice is not the cause of the delay when the first condition or the second condition is not satisfied.

**5.** The delay cause identification method according to any one of claims 1 to 4, further comprising
outputting a delay cause determination result which indicates the determined cause of the delay.

**6.** The delay cause identification method according to claim 2, wherein
the first determining includes:

determining whether or not whether or not a third condition which there exists a call destination workload common to paths involving a third processing time of the call source microservice among the paths is satisfied, based on the statistical value;
the third determining includes:
determining that the network related to the common call destination workload is the cause of the delay when the third condition and the second condition are satisfied

**7.** The delay cause identification method according to any one of claims 1 to 6, wherein
the second determining includes:

calculating the first difference in the first average value of the processing time of the call source microservice in each of a first period in which the delay in the response time from the call destination microservice to the call source microservice is detected and a second period that is different from the first period; and
calculating the second difference in the second average value of the response time from the call destination microservice to the call source microservice in each of the periods.

**8.** The delay cause identification method according to any one of claim 1 to 7, wherein
the call source microservice is any one of a plurality of microservices implementing a service, and
the call destination microservice is a microservice, of the plurality of microservices, called from the call source microservice.

**9.** A delay cause identification program in which a computer performs processing of:

when a delay in a response time from a call destination microservice to a call source microservice is detected, calculating a statistical value of a processing time of a call source workload for each of paths from the call source workload corresponding to the call source microservice to a plurality of call destination workloads corresponding to the call destination microservice; and
first determining whether or not a first condition which there exists a call destination workload common to paths involving a first processing time of the call source microservice among the paths is satisfied, based on the statistical value;
second determining whether or not a second condition which a first difference and a second difference are within a predetermined range is satisfied, the first difference being a difference in a first average value of the processing time of the call source microservice between an abnormal state and a normal state, the second difference being difference in a second average value of a response time from the call destination microservice to the call source microservice between the abnormal state and the normal state; and
third determining that a network related to the call destination microservice or the call destination microservice is a cause of the delay, when the first condition and the second condition are satisfied.

**10.** A delay cause identification apparatus comprising:

a calculation unit configured to calculate, when a delay in a response time from a call destination microservice to a call source microservice is detected, a statistical value of a processing time of a call source workload for each of paths from the call source workload corresponding to the call source microservice to a plurality of call destination workloads corresponding to the call destination microservice; and

a first condition determination unit configured to determine whether or not a first condition which there exists a call destination workload common to paths involving a first processing time of the call source microservice among the paths is satisfied, based on the statistical value;

a second condition determination unit configured to determine whether or not a second condition which a first difference and a second difference are within a predetermined range is satisfied, the first difference being a difference in a first average value of the processing time of the call source microservice between an abnormal state and a normal state, the second difference being difference in a second average value of a response time from the call destination microservice to the call source microservice between the abnormal state and the normal state; and

third determining that a network related to the call destination microservice or the call destination microservice is a cause of the delay, when the first condition and the second condition are satisfied.

# FIG. 1

FIG. 2

| | NODE N1 | NODE N2 | NODE N3 | NODE N4 |
|---|---|---|---|---|
| MS-A | MS-A1 | | MS-A2 | |
| MS-B | MS-B1 | MS-B2 | | |
| MS-C | | MS-C1 | | MS-C2 |

# FIG. 3

# FIG. 4

# FIG. 5

101

504

DISK

501　　　　　502　　　　　503

| CPU | | MEMORY | | DISK DRIVE |

500

505

COMMUNICATION I/F

506

PORTABLE RECORDING MEDIUM I/F

110

NETWORK

507

PORTABLE RECORDING MEDIUM

# FIG. 6

TIMER DATA 〜600

| | time window | service | mean | stdv | max |
|---|---|---|---|---|---|
| 600-1 | T1 | MS-A | Mat1 | Sat1 | Mxat1 |
| 600-2 | T1 | MS-B | Mbt1 | Sbt1 | Mxbt1 |
| 600-3 | T1 | MS-C | Mct1 | Sct1 | Mxct1 |
| 600-4 | T2 | MS-A | Mat2 | Sat2 | Mxat2 |
| | . . . | . . . | . . . | . . . | . . . |

FIG. 7

TRACE DATA ~ 700

| | trace ID | service name | workload | start time | duration |
|---|---|---|---|---|---|
| 700-1 | 4567 | MS-A | MS-A2 | t1 | d1 |
| 700-2 | 4567 | MS-B | MS-B2 | t2 | d2 |
| 700-3 | 4567 | MS-C | MS-C2 | t3 | d3 |
| 700-4 | 8765 | MS-A | MS-A1 | t4 | d4 |
| | . . . | . . . | . . . | . . . | . . . |

FIG. 8

FIG. 9

# FIG. 10

PATH BASED TRANSMISSION
SOURCE SPAN STATISTICAL TABLE  ~1000

| TRANSMISSION SOURCE | TRANSMISSION DESTINATION | AVERAGE | STANDARD DEVIATION | COUNT |
|---|---|---|---|---|
| MS-B1 | MS-C1 | Mm11 | S11 | N11 |
| MS-B1 | MS-C2 | Mm12 | S12 | N12 |
| MS-B1 | MS-C3 | Mm13 | S13 | N13 |
| MS-B2 | MS-C1 | Mm21 | S21 | N21 |
| MS-B2 | MS-C2 | Mm22 | S22 | N22 |
| MS-B2 | MS-C3 | Mm23 | S23 | N23 |
| MS-B3 | MS-C1 | Mm31 | S31 | N31 |
| MS-B3 | MS-C2 | Mm32 | S32 | N32 |
| MS-B3 | MS-C3 | Mm33 | S33 | N33 |

# FIG. 11

FIG. 12

| TRANSMISSION SOURCE | TRANSMISSION DESTINATION | SPAN OF MS-B |
|---|---|---|
| MS-B1 | MS-C1 | NORMAL |
| MS-B1 | MS-C2 | LONG |
| MS-B1 | MS-C3 | NORMAL |
| MS-B2 | MS-C1 | NORMAL |
| MS-B2 | MS-C2 | LONG |
| MS-B2 | MS-C3 | NORMAL |
| MS-B3 | MS-C1 | NORMAL |
| MS-B3 | MS-C2 | LONG |
| MS-B3 | MS-C3 | NORMAL |

# FIG. 13

START

S1301 — DELAY ALERT RECEIVED FROM APM SYSTEM? —— NO

YES

S1302 — ACQUIRE TIMER DATA

S1303 — ACQUIRE TRACE DATA

S1304 — IDENTIFY ABNORMAL TIME SLOT AND NORMAL TIME SLOT

S1305 — EXTRACT TRACE IN ABNORMAL TIME SLOT

S1306 — IDENTIFY PATHS BETWEEN WORKLOADS OF CALL SOURCE MICROSERVICE TO WORKLOADS OF CALL DESTINATION MICROSERVICE

S1307 — CALCULATE STATISTICAL VALUES OF SPAN OF CALL SOURCE MICROSERVICE FOR EACH PATH BETWEEN WORKLOADS

S1308 — GENERATE PATH BASED TRANSMISSION SOURCE SPAN STATISTICAL TABLE

S1309 — IS THERE CALL DESTINATION WORKLOAD COMMON TO PATHS INVOLVING LONG SPAN? —— YES —— B

NO

S1310 — DETERMINE THAT NETWORK OF CALL DESTINATION WORKLOAD MAY NOT BE REGARDED AS CAUSE OF DELAY

A

# FIG. 14

B

FIRST DIFFERENCE
CALCULATION PROCESSING — S1401

SECOND DIFFERENCE
CALCULATION PROCESSING — S1402

S1403

ARE FIRST
DIFFERENCE AND
SECOND DIFFERENCE WITHIN
PREDETERMINED
RANGE?

NO

YES          S1404                                    S1405

A    DETERMINE THAT NETWORK OF          DETERMINE THAT NETWORK OF
     CALL DESTINATION WORKLOAD          CALL DESTINATION WORKLOAD
     OR CALL DESTINATION               MAY NOT BE REGARDED AS CAUSE
     WORKLOAD IS CAUSE OF DELAY                OF DELAY

OUTPUT DELAY CAUSE
DETERMINATION RESULT — S1406

END

# FIG. 15

START

S1501 — EXTRACT SPAN DATA IN ABNORMAL TIME SLOT

S1502 — CALCULATE AVERAGE VALUE OF SPAN OF CALL SOURCE MICROSERVICE IN ABNORMAL STATE

S1503 — EXTRACT SPAN DATA IN NORMAL TIME SLOT

S1504 — CALCULATE AVERAGE VALUE OF SPAN OF CALL SOURCE MICROSERVICE IN NORMAL STATE

S1505 — CALCULATE FIRST DIFFERENCE

RETURN

# FIG. 16

START

S1601 — EXTRACT RESPONSE TIME DATA IN ABNORMAL TIME SLOT

S1602 — CALCULATE AVERAGE VALUE OF RESPONSE TIME OF CALL DESTINATION MICROSERVICE IN ABNORMAL STATE

S1603 — EXTRACT RESPONSE TIME DATA IN NORMAL TIME SLOT

S1604 — CALCULATE AVERAGE VALUE OF RESPONSE TIME OF CALL DESTINATION MICROSERVICE IN NORMAL TIME

S1605 — CALCULATE SECOND DIFFERENCE

RETURN

# FIG. 17

```
            ┌─────────────┐
            │    START    │
            └──────┬──────┘
                   │←──────────────────────────┐
                   ▼                            │
         ╱─────────────────────╲               │
S1701 ──╱ DELAY ALERT RECEIVED  ╲──── NO ───────┘
        ╲   FROM APM SYSTEM?    ╱
         ╲─────────────────────╱
                   │ YES
                   ▼
         ┌─────────────────────┐
S1702 ──│  ACQUIRE TIMER DATA  │
         └──────────┬──────────┘
                    ▼
         ┌─────────────────────┐
S1703 ──│  ACQUIRE TRACE DATA  │
         └──────────┬──────────┘
                    ▼
         ┌─────────────────────────────┐
S1704 ──│ IDENTIFY ABNORMAL TIME SLOT  │
         │     AND NORMAL TIME SLOT     │
         └──────────────┬──────────────┘
                        ▼
         ┌───────────────────────────────┐
         │ CALCULATE AVERAGE VALUE OF     │
S1705 ──│ SPAN OF CALL DESTINATION       │
         │ MICROSERVICE IN ABNORMAL       │
         │ TIME SLOT                      │
         └───────────────┬───────────────┘
                         ▼
         ┌───────────────────────────────┐
         │ CALCULATE AVERAGE VALUE OF     │
S1706 ──│ SPAN OF CALL DESTINATION       │
         │ MICROSERVICE IN NORMAL         │
         │ TIME SLOT                      │
         └───────────────┬───────────────┘
                         ▼
              ╱─────────────────────╲
             ╱       IS SPAN OF       ╲
S1707 ──────╱ CALL DESTINATION         ╲─── NO ──→ (D)
            ╲  MICROSERVICE LONGER?    ╱
             ╲─────────────────────╱
                       │ YES
                       ▼
         ┌───────────────────────────────┐
S1708 ──│ DETERMINE THAT CALL DESTINATION│
         │ MICROSERVICE IS CAUSE OF DELAY │
         └───────────────┬───────────────┘
                         ▼
                        (C)
```

# FIG. 18

D

S1801 — EXTRACT TRACE IN ABNORMAL TIME SLOT

S1802 — IDENTIFY PATHS BETWEEN WORKLOADS OF CALL SOURCE MICROSERVICE TO WORKLOADS OF CALL DESTINATION MICROSERVICE

S1803 — CALCULATE STATISTICAL VALUES OF SPAN OF CALL SOURCE MICROSERVICE FOR EACH PATH BETWEEN WORKLOADS

S1804 — GENERATE PATH BASED TRANSMISSION SOURCE SPAN STATISTICAL TABLE

S1805 — IS THERE CALL DESTINATION WORKLOAD COMMON TO PATHS INVOLVING LONG SPAN?

YES

E

NO

S1806 — DETERMINE THAT NETWORK OF CALL DESTINATION WORKLOAD MAY NOT BE REGARDED AS CAUSE OF DELAY

C

# FIG. 19

E

FIRST DIFFERENCE
CALCULATION PROCESSING — S1901

SECOND DIFFERENCE
CALCULATION PROCESSING — S1902

S1903

ARE FIRST
DIFFERENCE AND
SECOND DIFFERENCE WITHIN
PREDETERMINED
RANGE?

NO

YES     S1904

C

DETERMINE THAT NETWORK OF
CALL DESTINATION WORKLOAD IS
CAUSE OF DELAY

S1905

DETERMINE THAT NETWORK OF
CALL DESTINATION WORKLOAD
MAY NOT BE REGARDED AS CAUSE
OF DELAY

OUTPUT DELAY CAUSE
DETERMINATION RESULT — S1906

END

Europäisches
Patentamt

European
Patent Office

Office européen
des brevets

## EUROPEAN SEARCH REPORT

**Application Number**

EP 21 16 9837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/307889 A1 (MORIKI TOSHIOMI [JP] ET AL) 15 December 2011 (2011-12-15) * the whole document * | 1-10 | INV. H04L29/08 |
| A | US 2019/245766 A1 (ONOUE KOICHI [JP]) 8 August 2019 (2019-08-08) * the whole document * | 1-10 | |

**TECHNICAL FIELDS SEARCHED (IPC)**

H04L

The present search report has been drawn up for all claims

| Place of search | Date of completion of the search | Examiner |
|---|---|---|
| The Hague | 30 August 2021 | Fokas, Michail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 9837

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2021

| Patent document cited in search report | | Publication date | Patent family member(s) | | Publication date |
|---|---|---|---|---|---|
| US 2011307889 | A1 | 15-12-2011 | JP | 5458308 B2 | 02-04-2014 |
| | | | JP | 2011258098 A | 22-12-2011 |
| | | | US | 2011307889 A1 | 15-12-2011 |
| US 2019245766 | A1 | 08-08-2019 | JP | 2019135598 A | 15-08-2019 |
| | | | US | 2019245766 A1 | 08-08-2019 |

EPO FORM P0459

For more details about this annex : see Official Journal of the European Patent Office, No. 12/82

**REFERENCES CITED IN THE DESCRIPTION**

**Patent documents cited in the description**

• JP 2018081440 A